# EUROPÄISCHE PATENTANMELDUNG

(11) **EP 0 976 888 A2**
(43) Veröffentlichungstag der Anmeldung: **02.02.2000**
(21) Anmeldenummer: 99890240.7
(22) Anmeldetag: 20.07.1999
(51) Int. Cl.: E04F 15/022, B32B 3/14, B32B 21/04, B32B 7/04

(54) **Fussbodenbelag, insbesondere Fertigparkett**

(30) Priorität: 27.07.1998 AT 128298
(71) Anmelder: Meyer, Ernst Christophe, 8401 Kalsdorf (AT)
(72) Erfinder: Meyer, Ernst Christophe, 8401 Kalsdorf (AT)
(74) Vertreter: Köhler-Pavlik, Johann, Dipl.-Ing.

(57) **Zusammenfassung**

Die Erfindung betrifft einen Fußbodenbelag, insbesondere Fertigparkett, umfassend Dielen (5) mit einer Nutzschicht (1) und einer mit der Nutzschicht (1) verbundenen Trägerschicht (2), sowie Stabilisierungsplatten (3). Für eine möglichst einfache und rasche Verlegung ohne Beeinträchtigung der Formstabilität und guten optischen Eigenschaften ist erfindungsgemäß vorgesehen, daß die Nutzschicht (1) der Dielen (5) gegenüber der Trägerschicht (2) zumindest in Querrichtung, vorzugsweise sowohl in Quer- als auch in Längsrichtung der Diele (5) überlappend angeordnet ist und daß die Stabilisierungsplatten (3) von den Dielen (5) getrennt angeordnet sind. Die erfindungsgemäßen Fußbodenelemente haben keine Nut-Feder-Verbindung. Vorteilhafterweise sind die Stabilisierungsplatten (3) und bzw. oder die Trägerschicht (2) an der, der Nutzschicht (1) gegenüberliegenden Seite sowie die Nutzschicht (1) an der durch die Überlappung mit der Trägerschicht (2) bedingten freien Unterseite und die Trägerschicht (2) an der durch die Überlappung bedingten freien Oberseite werksmäßig mit einem Klebemittel (4), vorzugsweise Kontaktkleber versehen.

## Beschreibung

Die Erfindung betrifft einen Fußbodenbelag, insbesondere Fertigparkett, umfassend Dielen mit einer Nutzschicht und einer mit der Nutzschicht verbundenen Trägerschicht, sowie Stabilisierungsplatten.

Herkömmliche Parkettböden werden so verlegt, daß einzelne Parkettplättchen auf dem Fußboden zu Mustern gelegt und mit der Unterlage verbunden werden. Zur vereinfachten Verlegung werden Fertigholzböden angeboten, bei welchen die einzelnen Parkettplättchen bereits zu Mustem zusammengesetzt auf einer Trägerschicht angeordnet sind. Die einzelnen so entstandenen Dielen werden meist über Nut und Feder zusammengefügt und miteinander verklebt.

Die DE 39 19 514 C2 beschreibt eine speziell gestaltete Fertigparkettverlegeeinheit, bei der die Längsfugen zwischen den Fumierlamellen auf ihrer ganzen Länge dicht geschlossen sind und geschlossen bleiben. Die Verbindung der Verlegeeinheiten miteinander geschieht in herkömmlicher Weise über Nut und Feder.

Die EP 240 317 A2 offenbart einen Parkettboden, bei dem die Trägerschicht zur Trittschalldämpfung aus speziellem Fasermaterial besteht. Die Verbindung der Parkettelemente geschieht in herkömmlicher Art und Weise über Nut und Feder.

Die WO 93/24295 A1 beschreibt einen Holzbelag, bei dem die Oberschicht aus Holz und die Trägerschicht aus einem durch Druck- und Temperatureinfluß verdichtetes und miteinander zumindest teilweise verbundenes stückiges thermoplastisches Kunststoffolienmaterial besteht. Dadurch werden die Vorteile des Naturstoffbelags mit den günstigen elastischen Eigenschaften des Kunststoffmaterials verbunden und es resultiert ein besonders trittelastischer, schalldämmender und dimensionsstabiler Bodenbelag. Auf die Verbindung zwischen einzelnen Bodenbelagselementen wird in diesem Dokument nicht genauer eingegangen. Lediglich die Ausfüllung allfälliger Schlitze mit einer Füllmasse wird erwähnt. Eine derartige Ausführungsform bietet aber eine unzureichend stabile Verbindung der Fußbodenelemente.

Die Aufgabe der vorliegenden Erfindung besteht in der Schaffung eines Fußbodenbelags der oben angegebenen Art, der möglichst einfach und rasch und ohne Beeinträchtigung der Formstabilität zu verlegen ist. Der Fußbodenbelag soll möglichst gute optische Eigenschaften aufweisen.

Gelöst wird die erfindungsgemäße Aufgabe dadurch, daß die Nutzschicht der Dielen gegenüber der Trägerschicht überlappend angeordnet ist und daß die Stabilisierungsplatten von den Dielen getrennt angeordnet sind. Durch diese getrennte Bauweise von Dielen und Stabilisierungsplatten entfallen die üblicherweise bei derartigen Fußbodenelementen vorhandenen Verbindungen in Form von Nut und Feder. Die Anforderungen an benötigtem Werkzeug ist gering. Im Minimalfall genügt ein Gummihammer und eine Säge für die Fußbodenverlegung.

Vorteilhafterweise sind die Stabilisierungsplatten und bzw. oder die Trägerschicht an der, der Nutzschicht gegenüberliegenden Seite werksmäßig mit einem Klebemittel versehen. Durch diese Ausgestaltung ist eine besonders einfache und rasche Verlegung ohne Verwendung von Hilfsstoffen, wie Leim, Lack, etc. möglich.

Die Formstabilität des Fußbodens kann weiter erhöht werden, wenn die Nutzschicht an der durch die Überlappung mit der Trägerschicht bedingten freien Unterseite und die Trägerschicht an der durch die Überlappung bedingten freien Oberseite werksmäßig mit einem Klebemittel versehen sind.

Vorteilhafterweise handelt es sich bei dem Klebemittel um einen werksmäßig aufgebrachten Kontaktkleber, sodaß bei Zusammenfügen der Dielen mit den Stabilisierungsplatten eine kraftschlüssige Verbindung entsteht. Ein Abdecken der Klebemittel vor Verlegung ist nicht notwendig.

Zur Erhöhung der Stabilisierung ist vorgesehen, daß die Nutzschicht gegenüber der Trägerschicht zumindest in Querrichtung der Diele, vorzugsweise sowohl in Quer- als auch in Längsrichtung der Diele überlappend angeordnet ist.

Gemäß einem weiteren Merkmal der Erfindung ist vorgesehen, daß die Breite und bzw. oder die Länge der Nutzschicht größer als die Breite und bzw. oder die Länge der Trägerschicht ist. Der Größenunterschied wird dabei nur so groß gewählt, daß etwaige Maßtoleranzen berücksichtigt werden und die Nutzschichten der Dielen sicher dicht und ohne Spaltbildung aneinanderliegen.

Gemäß einem weiteren Erfindungsmerkmal besteht die Nutzschicht aus gegeneinander versetzten Parkettlamellen od. dgl., und sind die Dielen entsprechend der Versetzung der Parkettlamellen geformt. Diese Ausführungsform bewirkt ein einheitliches, harmonisches Erscheinungsbild des Fertigparkettbodens nach der Verlegung, da kein gerader Schnitte entlang der Breite einer Diele sichtbar wird. Diese Ausführungsform wäre bei einem herkömmlichen Fertigparkettelement nicht bzw. nur mit enormem Aufwand und hohem Verschnitt bei der Verlegung möglich.

Die Merkmale der Erfindung werden anhand der beiliegenden Abbildungen einer bevorzugten Ausführungsform der Erfindung näher erläutert. Darin zeigen:
- Fig. 1: eine Draufsicht auf eine Ausführungsform einer Diele eines erfindungsgemäßen Fertigparkettbodens,
- Fig. 2: eine Seitenansicht der Diele gemäß Fig. 1,
- Fig. 3: eine Draufsicht auf eine andere Ausführungsform einer Diele eines erfindungsgemäßen Fertigparkettbodens,
- Fig. 4: eine Draufsicht auf einen teilweise verlegten erfindungsgemäßen Fußbodenbelag, und
- Fig. 5: eine Schnittbild des Fußbodenbelags gemäß Fig. 4 entlang der Schnittlinie V-V.

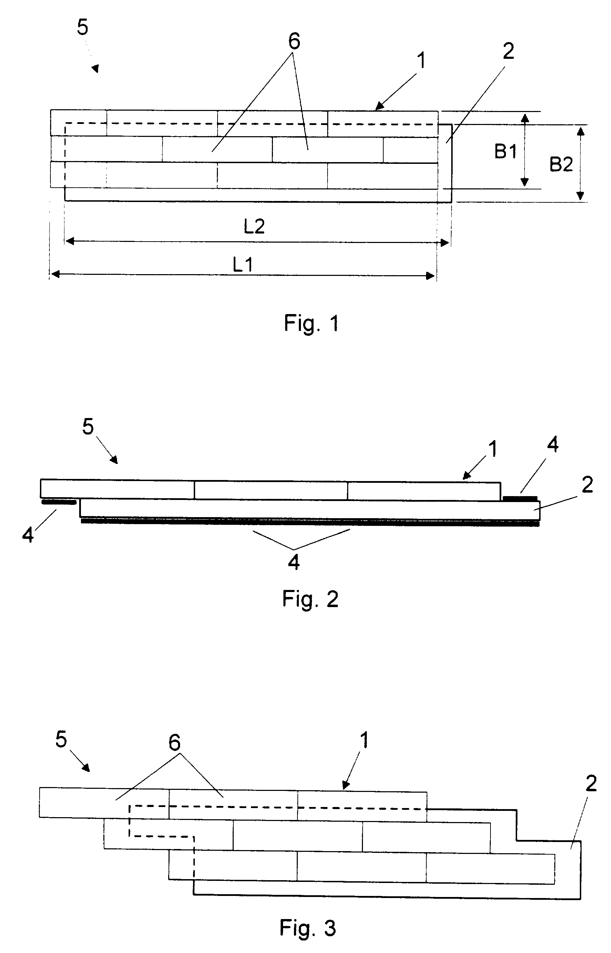

In Fig. 1 ist eine Draufsicht auf eine Ausführungsform einer Diele 5 des erfindungsgemäßen Fußbodenbelags in Form eines Fertigparkettelements dargestellt. Die Diele 5 besitzt in herkömmlicher Weise rechteckige Gestalt, deren Nutzschicht 1 aus einzelnen zu einem Muster zusammengesetzten Parkettlamellen 6 besteht. Die Parkettlamellen 6 bestehen vorzugsweise aus Echtholz mit bestimmter Dicke, welche mit der Trägerschicht 2 verbunden, vorzugsweise verklebt sind. Die Nutzschicht 1 kann bereits fertig versiegelt, gewachst od. anders beschichtet sein. Die Trägerschicht 2 kann aus Holzfaserplatten (MDF-Platten, middle density fibre), Sperrholz, Kunststoff oder ähnlichen Materialien bestehen. Die Nutzschicht 1 ist gegenüber der Trägerschicht 2 zumindest in Querrichtung der Diele 5 vorzugsweise sowohl in Quer- als auch in Längsrichtung der Diele 5 verschoben angeordnet. Um sicherzustellen, daß nach der Verlegung des Fußbodenbelags keine Zwischenräume zwischen den Nutzschichten 1 einzelner Dielen 5 entstehen, ist vorteilhafterweise die Breite vorzugsweise die Breite B₁ und bzw. oder die Länge L₁ der Nutzschicht 1 größer als die Breite B₂ und bzw. oder die Länge L₂ der Trägerschicht 2.

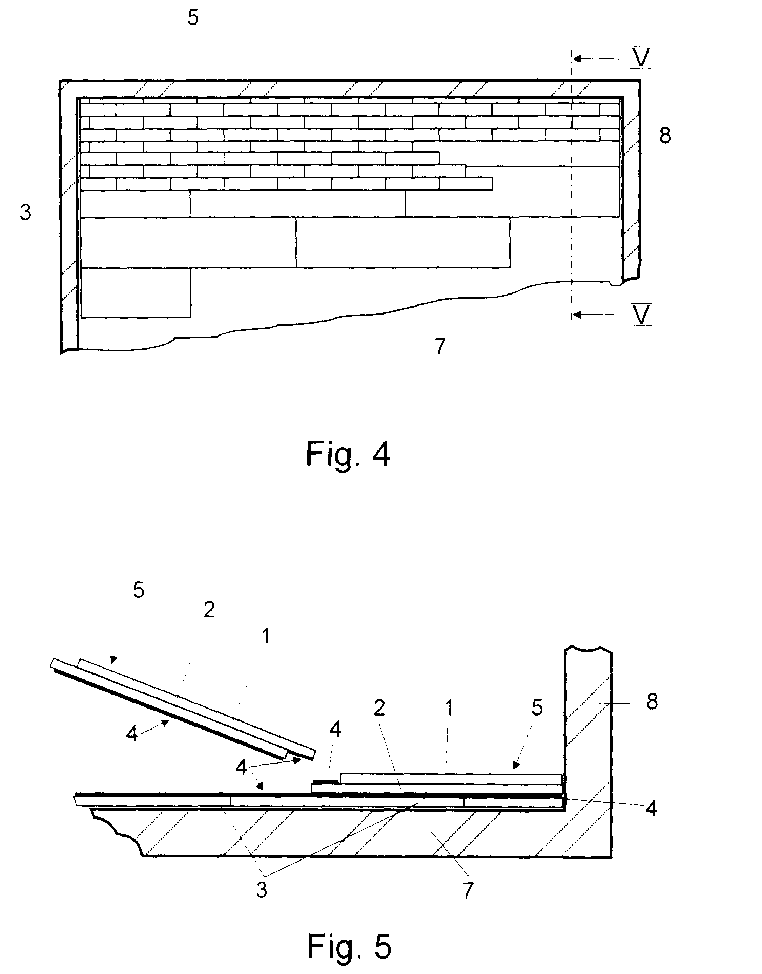

Wie der Seitenansicht gemäß Fig. 2 zu entnehmen, ist die Unterseite der Trägerschicht 2 mit einem Klebemittel 4 versehen. Für eine bessere Stabilität des verlegten Fußbodens ist vorteilhafterweise auch die überstehende Unterseite der Nutzschicht 1 und die überstehende Oberseite der Trägerschicht 2 mit Klebemittel 4 versehen. Beim verwendeten Klebemittel handelt es sich vorzugsweise um einen Kontaktkleber, der beim Zusammenfügen der Dielen 5 untereinander und beim Auflegen auf den am Untergrund 7 verlegten und ebenfalls mit Kontaktkleber 4 versehenen Stabilisierungsplatten 3 (siehe Fig. 4 und 5) eine kraftschlüssige Verbindung ergibt. Gegenüber den bekannten Ausführungsformen von vergleichbaren Fußbodenelementen verfügt die vorliegende Konstruktion über keine Nut und Feder. Die überstehenden teile der Nutzschicht 1 bzw. Trägerschicht 2 können wesentlich breiter ausgeführt werden, als die Nut bzw. Feder bei herkömmlichen Bodenelementen. Dadurch resultiert eine wesentlich höhere Stabilität. Im Gegensatz zu Ausführungen mit Nut und Feder, wo der in die Nut eingebrachte Leim zufällig verteilt wird, existiert bei der vorliegenden Ausführungsform eine sichere Verbindung an allen stellen, an denen das Klebemittel 4 aufgebracht wurde.

Fig. 3 zeigt eine andere Ausführungsform einer Diele 5 dessen umriß der Form der Parkettlamellen 6 der Nutzschicht 1 folgt. Dadurch wird ein einheitliches, harmonisches Erscheinungsbild des Fertigparkettbodens nach der Verlegung erzielt, da kein gerader Schnitte entlang der Breite einer Diele 5 sichtbar ist. Diese Ausführungsform wäre bei einem herkömmlichen Fertigparkettelement nicht bzw. nur mit enormem Aufwand und hohem Verschnitt bei der Verlegung möglich.

Fig. 4 zeigt einen Ausschnitt eines Raumes in Draufsicht mit teilweise verlegtem Fußboden gemäß der vorliegenden Erfindung. Der Raum ist durch die Wand 8 begrenzt. Die an einer Seite mit Kontaktkleber 4 versehenen Stabilisierungsplatten 3 werden lose auf trockenem ebenem Untergrund 7 schwimmend verlegt, vollflächig verklebt, verschraubt oder genagelt. Die Verbindung der Dielen 5 mit den Stabilisierungsplatten 3 erfolgt durch vorzugsweise werksmäßig vorher aufgetragenen Kontaktkleber 4 auf der Oberseite der Stabilisierungsplatten 3 und der Unterseite der Trägerschicht 2 der Dielen 5. Wie aus dem Schnittbild gemäß Fig. 5 besser ersichtlich, erfolgt die Verlegung durch schräges aneinanderfügen der Dielen 5 und Herunterklappen gegen den Untergrund 7. Durch das Aneinanderfügen der mit Kontaktkleber 4 versehenen Elemente entsteht eine kraftschlüssige Verbindung. Zusätzliche Hilfsmittel, wie Leim, Lack od. dgl. oder Spezialwerkzeug sind nicht notwendig. Im Minimalfall reichen eine Säge und ein Gummihammer für die Verlegung, weshalb diese leicht und rasch auch von ungeübten Personen durchführbar ist.

Üblicherweise weisen die Dielen 4 eine Breite von 70 - 400 mm, eine Länge von 500 - 2400 mm und eine Stärke von 10 - 22 mm auf. Die Größe der Stabilisierungsplatten 3 kann beliebig sein.

Anstelle von Echtholz kann die Nutzschicht 1 selbstverständlich auch aus Kunststoff oder anderen Materialien bestehen. Auch die verwendeten Materialien für die Trägerschicht 2 und die Stabilisierungsschicht 3 können den Anforderungen entsprechend nahezu beliebig gewählt werden.

## Patentansprüche

1. Fußbodenbelag, insbesondere Fertigparkett, umfassend Dielen (5) mit einer Nutzschicht (1) und einer mit der Nutzschicht (1) verbundenen Trägerschicht (2), sowie Stabilisierungsplatten (3), dadurch gekennzeichnet, daß die Nutzschicht (1) der Dielen (5) gegenüber der Trägerschicht (2) überlappend angeordnet ist und daß die Stabilisierungsplatten (3) von den Dielen (5) getrennt angeordnet sind.

2. Fußbodenbelag nach Anspruch 1, dadurch gekennzeichnet, daß die Stabilisierungsplatten (3) und bzw. oder die Trägerschicht (2) an der, der Nutzschicht (1) gegenüberliegenden Seite werksmäßig mit einem Klebemittel (4) versehen sind.

3. Fußbodenbelag nach Anspruch 2, dadurch gekennzeichnet, daß die Nutzschicht (1) an der durch die Überlappung mit der Trägerschicht (2) bedingten freien Unterseite und die Trägerschicht (2) an der durch die Überlappung bedingten freien Oberseite werksmäßig mit einem Klebemittel (4) versehen sind.

4. Fußbodenbelag nach Anspruch 2 oder 3, dadurch gekennzeichnet, daß das Klebemittel (4) ein Kontaktkleber ist, sodaß bei Zusammenfügen der Dielen (5) mit den Stabilisierungsplatten (3) eine kraftschlüssige Verbindung entsteht.

5. Fußbodenbelag nach einem der Ansprüche 1 bis 4, dadurch gekennzeichnet, daß die Nutzschicht (1) gegenüber der Trägerschicht (2) zumindest in Querrichtung der Diele (5), vorzugsweise sowohl in Quer- als auch in Längsrichtung der Diele (5) überlappend angeordnet ist.

6. Fußbodenbelag nach Anspruch 5, dadurch gekennzeichnet, daß die Breite (B₁) und bzw. oder die Länge (L₁) der Nutzschicht (1) größer als die Breite (B₂) und bzw. oder die Länge (L₂) der Trägerschicht (2) ist.

7. Fußbodenbelag nach einem der Ansprüche 1 bis 6, dadurch gekennzeichnet, daß die Nutzschicht (1) aus gegeneinander versetzten Parkettlamellen (6) od. dgl. besteht, und daß die Dielen (5) entsprechend der Versetzung der Parkettlamellen (6) geformt sind.
